# EUROPÄISCHE PATENTANMELDUNG

(11) **EP 3 262 929 A1**
(43) Veröffentlichungstag der Anmeldung: **03.01.2018**
(21) Anmeldenummer: 16176368.5
(22) Anmeldetag: 27.06.2016
(51) Int. Cl.: A01K 13/00

(54) **TRAGBARE REINIGUNGSVORRICHTUNG FÜR TIERE**

(71) Anmelder: Jochum, Julian, 81479 München (DE)
(72) Erfinder: Jochum, Julian, 81479 München (DE)
(74) Vertreter: Köster, Hajo

(57) **Zusammenfassung**

Bereit gestellt wird eine tragbare Reinigungsvorrichtung für Tiere, insbesondere für Katzen- und Hundepfoten, mit einer Bürste (2), die mit Reinigungselementen (5) ausgestattet ist, mit einem Behälter (22) für eine Reinigungsflüssigkeit, mit mindestens einer Leitung (7) für die Reinigungsflüssigkeit von dem Behälter (22) zur Bürste (2), einem Motor (17) und einer Energiequelle für den Motor (17). Diese Reinigungsvorrichtung ist dadurch gekennzeichnet, dass die Bürste (2) beweglich in der Reinigungsvorrichtung (1) angeordnet ist, der Motor (17) dazu geeignet ist, im Betriebszustand die Bürste (2) zu bewegen. Diese Reinigungsvorrichtung ermöglicht nicht nur eine wirksame mechanische Reinigung und Pflege, sondern kann auch zum Waschen eingesetzt werden.

## Beschreibung

Die Erfindung betrifft eine tragbare Reinigungsvorrichtung für Tiere insbesondere für Katzen- und Hundepfoten, mit einer Bürste, die mit Reinigungselementen ausgestattet ist, mit einem Behälter für eine Reinigungsflüssigkeit, mit mindestens einer Leitung für die Reinigungsflüssigkeit von dem Behälter zur Bürste, einem Motor und einer Energiequelle für den Motor.

Geräte zur Reinigung und Pflege von Tieren, insbesondere Hunden sowie weiter insbesondere von Hundepfoten, sind in vielfältigen Ausgestaltungen bekannt.

Der hier verwendete Ausdruck "Reinigungsvorrichtung" steht stellvertretend für derartige Geräte und Vorrichtungen, die nicht nur für Reinigungszwecke, sondern auch für Pflegezwecke eingesetzt werden können.

Ein Gerät zur Reinigung und Pflege von Hunden, insbesondere von Hundepfoten ist beispielsweise aus der PCT/DE2003/001385 (WO 2003/092366) bekannt. Bei dem dort beschriebenen Gerät handelt es sich um ein großvolumiges Gerät für eine stationäre Pflege bzw. Reinigung. Weitere derartige Geräte und Vorrichtungen sind bekannt aus US 459,502, US 7107937, US 5845604, WO 03/092366 A1, US 6439160 B1 und US 279307.

Daneben sind auch schon einfache und handliche Vorrichtungen zur Reinigung von Hundepfoten bekannt, die transportabel ausgestaltet sind.

So ist beispielsweise aus der EP 2130430 A1 eine Vorrichtung zur Reinigung von Hundepfoten bekannt, die einen mit Flüssigkeit befüllbaren Hohlkörper aufweist, dessen Innenwände mit Reinigungskörpern, beispielsweise Bürsten besetzt sind. Mit deren Hilfe kann Schmutz sowohl trocken als auch nass aus dem Fell der Beine und Pfoten entfernt werden. Diese bekannte Vorrichtung kann zudem über einen Adapter an eine externe Flüssigkeitszufuhr angeschlossen werden.

Aus der DE10 2007 038802 A1 ist eine ebenfalls transportable Waschvorrichtung für Hunde bekannt, die mit einer Waschkammer, einem Behälter für ein flüssiges Waschmittel und einer mit einer Pumpe ausgestatteten Spritzvorrichtung für die Waschmittelflüssigkeit ausgestattet ist.

Aufgabe der vorliegenden Erfindung ist es, eine tragbare Reinigungsvorrichtung der oben beschriebenen Art bereitzustellen, die nicht nur eine wirksame mechanische Reinigung und Pflege ermöglicht, sondern auch zum Waschen eingesetzt werden kann.

Gelöst wird diese Aufgabe durch eine tragbare Reinigungsvorrichtung gemäß Anspruch 1.

Bei der erfindungsgemäßen Reinigungsvorrichtung handelt es sich um ein tragbares Gerät, das von einem Benutzer per Hand ergriffen werden kann, um eine Tier- und insbesondere eine Hundepfote mit dieser Vorrichtung zu reinigen bzw. zu pflegen. Es handelt sich daher um kein stationäres, beispielsweise auf dem Boden stehendes Gerät, sondern um ein manuell handhabbares Gerät bzw. Handgerät.

Die erfindungsgemäße Reinigungsvorrichtung ist mit einer Bürste ausgestattet, die mit Reinigungselementen versehen ist. Diese Reinigungselemente können jeglicher bekannter Art sein. Es muss sich nicht zwangsläufig um Borsten handeln, wobei dies jedoch zweckmäßig sowie bevorzugt ist, worauf nachstehend noch näher eingegangen wird.

Des Weiteren ist die erfindungsgemäße Reinigungsvorrichtung mit einem Behälter für eine Reinigungsflüssigkeit ausgestattet. Bei dieser Reinigungsflüssigkeit handelt es sich zweckmäßigerweise um Wasser, das mit einem Tensid oder ähnlichem ausgestattet sein kann.

Weiterhin ist mindestens eine Leitung für die Reinigungsflüssigkeit vorhanden, die von dem Behälter zur Bürste führt. Bei dieser Leitung kann es sich um jede beliebige Leitung handeln, beispielsweise einen Schlauch oder lediglich eine Bohrung. Diese Leitung muss nur dafür Sorge tragen, dass Reinigungsflüssigkeit von dem Behälter in denjenigen Bereich, beispielsweise in den Bürstenbereich, gelangen kann, mit dem das Tier bzw. die Hundepfote durch den Benutzer gereinigt wird.

Des Weiteren sind auch ein Motor und eine Energiequelle für diesen Motor vorhanden. Sowohl die Energiequelle als auch der Motor können beliebiger Natur sein. So kann beispielswiese ein mechanischer Feder-Aufziehmotor eingesetzt werden. Vorzugsweise kommt ein Elektromotor zum Einsatz. In diesem Fall handelt es sich bei der Energiequelle um einen Akku oder eine Batterie.

Die Bürste der erfindungsgemäßen Reinigungsvorrichtung ist beweglich in dieser Reinigungsvorrichtung angeordnet bzw. gelagert. Die Art der Bewegung ist dabei beliebiger Art. Es kann sich beispielsweise um eine Drehung, eine Rotation oder eine Hin- und Her-Bewegung sowie um Kombinationen daraus handeln.

Diese Bewegung wird durch den Motor hervorgerufen, der im Betriebszustand und somit im eingeschalteten Zustand geeignet ist, die Bürste in dem gewünschten Sinne zu bewegen.

Um beispielsweise eine Hundepfote mit Hilfe der erfindungsgemäßen Reinigungsvorrichtung zu pflegen und/oder zu reinigen, ergreift der Benutzer die erfindungsgemäße tragbare Reinigungsvorrichtung und führt sie mit ihrer Bürste in Richtung der Hundepfote. Bei Anlage der Bürste an die Hundepfote erfolgt durch die Bewegung der Bürste bezüglich der Reinigungsvorrichtung eine intensive "Behandlung" der Hundepfote. Diese Bewegung der Bürste wird primär nicht durch die Hand des Benutzers, sondern durch den genannten Motor hervorgerufen. Natürlich ist es auch möglich, dass der Benutzer eine Dreh- oder Hin-Her-Bewegung der Reinigungsvorrichtung als Ganzes durchführt.

Nach einer bevorzugten Ausführungsform ist die Bürste mit Reinigungselementen in Form von Borsten ausgestattet, die von bekannter Natur sind. Weiterhin bevorzugt ist die Bürste mit unterschiedlich starken, mit unterschiedlich langen oder mit unterschiedlich langen sowie unterschiedlich starken Borsten ausgestattet.

Weiterhin bevorzugt ist die Bürste drehbar oder oszillierend hin- und her-beweglich in der Reinigungsvorrichtung angeordnet bzw. gelagert.

Bei dieser drehbaren Bewegung der Bürste handelt es sich vorzugsweise um eine oszillierende Drehbewegung. Mit anderen Worten, eine drehbare Bürste wird in eine Richtung gedreht und dann wieder in die andere Richtung zurückgedreht usw.

Die Bürste kann auch in einer Längsrichtung hin- und herbeweglich ausgestaltet sein. In diesem Falle stellt die oszillierende Bewegung eine Hin- und Her-Bewegung in einer Längsrichtung dar.

Die Bürste stellt vorzugsweise eine Platte dar. Der Ausdruck "Platte" bezeichnet alle Ausgestaltungen, die in etwa plattenförmig sind. Die Dicke einer derartigen Platte muss nicht in allen Bereichen der Platte dieselbe sein. So ist es durchaus möglich, eine Platte zum Einsatz zu bringen, deren Dicke zur Mitte hin zunimmt, sodass sich eine Art Erhebung bildet. Auch ist es möglich, die Dicke der Platte an ihren Rändern größer zu wählen, sodass sich zur Mitte hin eine Senkung ergibt. Auch eine wellenförmige Ausgestaltung ist möglich. Die Reinigungselemente bzw. Borsten sind bei dieser Ausführungsform auf einer der großen Seite der Platte angeordnet.

Weiterhin bevorzugt stellt die Bürste eine Kreisscheibe dar. Auch in diesem Fall muss die Kreisscheibe nicht in jedem Bereich die gleiche Dicke besitzen. So kann die Kreisscheibe beispielsweise zur Mitte hin dicker werden, sodass sich eine Art Kuppel ergibt. Auch kann diese Kreisscheibe eine Art Trog bilden. Die Drehachse verläuft bei dieser Ausführungsform senkrecht zur Kreisscheibe sowie durch den Mittelpunkt der Kreisscheibe. Eine derartige Kreisscheibe kann auch als Drehteller bezeichnet werden. Die Reinigungselemente bzw. Borsten sind bei dieser Ausführungsform ebenfalls auf einer der großen Seite der Platte angeordnet.

Die Borsten der Bürste sind dabei zweckmäßigerweise senkrecht zur der durch die Platte bzw. Kreisscheibe gebildeten Ebene angeordnet.

Die Kreisscheibe der erfindungsgemäßen Reinigungsvorrichtung besitzt vorzugsweise an ihrem Außenrand auf derjenigen Seite, auf der die Reinigungselemente bzw. Borsten angeordnet sind, einen radial umlaufenden schwammartigen Steg, der sich senkrecht zur Ebene der Kreisscheibe erstreckt. Durch diesen Steg wird das der Bürste zugeführte Wasser durch den Schwamm aufgesogen und dadurch im Bereich der Bürste gehalten.

Der Behälter der erfindungsgemäßen Reinigungsvorrichtung, in dem sich die Reinigungsflüssigkeit befindet, bei der es sich vorzugsweise um Wasser handelt, ist vorzugsweise komprimierbar. Um dies zu erreichen, kann zumindest ein Teil der Seitenwand dieses Behälters aus einem elastischen Material gefertigt sein.

Durch Zusammendrücken des Behälters durch den Benutzer wird die im Behälter befindliche Reinigungsflüssigkeit durch die Leitung zur Bürste hin bewegt.

Der Behälter besitzt zweckmäßigerweise zwei Stirnwände und eine umlaufende Außen- bzw. Seitenwand, die vorzugsweise als Balg ausgebildet ist. Der Behälter besitzt somit zweckmäßigerweise die Form eines Hohlzylinders, wobei die Querschnittsform nicht zwingend zylindrisch, sondern auch mehreckig sein kann.

Die erfindungsgemäße Reinigungsvorrichtung ist vorzugsweise mit einem nach außen offenen Reinigungsbehältnis ausgestattet, das zur Aufnahme einer Katzen- oder Hundepfote dient. Die Bürste ist im Inneren dieses Reinigungsbehältnisses angeordnet, während sich der Behälter für die Reinigungsflüssigkeit außerhalb davon befindet.

Die Elemente und Teile der Reinigungsvorrichtung sind - soweit möglich und sofern nichts anderes angegeben ist - aus einem Kunststoffmaterial gefertigt. Motor, Energiequelle und weitere elektrische Einrichtungen sind aus den dafür üblicherweise eingesetzten Materialien gefertigt.

Die Erfindung wird anhand nachstehender nicht maßstabsgetreuer Zeichnungen näher erläutert. Von den Zeichnungen zeigen:

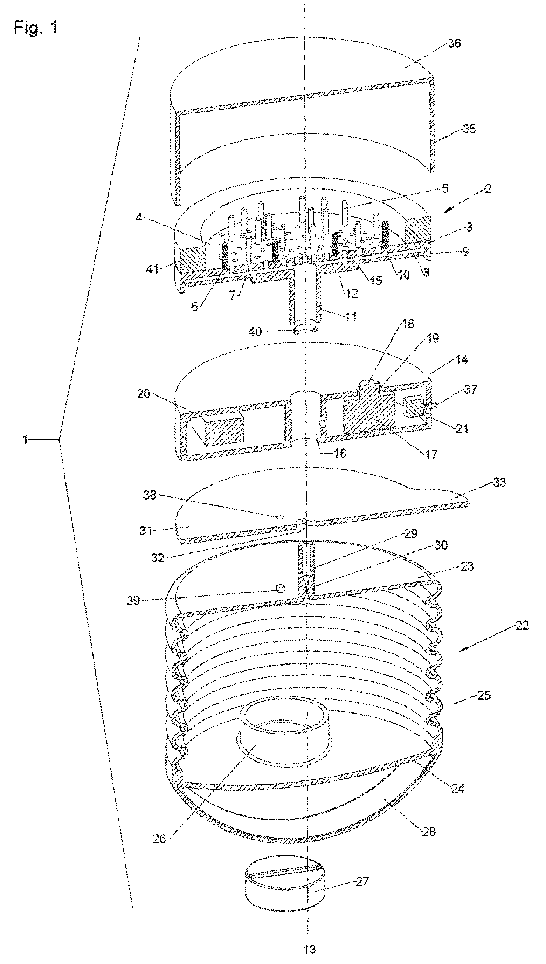

- Figur 1: einen Längsschnitt durch eine erfindungsgemäße Reinigungsvorrichtung in Explosionsdarstellung und

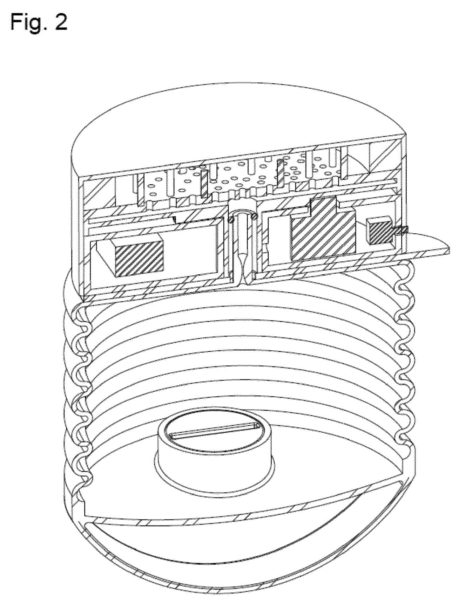

- Figur 2: einen Längsschnitt der in der Figur 1 gezeigten Reinigungsvorrichtung im zusammengebauten Zustand.

Die erfindungsgemäße tragbare Reinigungsvorrichtung 1 besitzt eine Bürste 2, die auch als Bürstenkopf bezeichnet werden kann.

Die Bürste 2 ist mit einer Kreisscheibe 3 ausgestattet, die auf der nach außen zeigenden Vorderseite 4 mit mehreren Borsten 5 versehen ist, die mit einem ihrer Enden in Sacklochbohrungen 6 in der Kreisscheibe 3 eingesetzt sind. Diese Borsten 5 erstrecken sich in etwa senkrecht zur durch die Kreisscheibe 3 gebildeten Ebene.

Bei der dargestellten Ausführungsform sind zwei Gruppen von Borsten 5 vorhanden. Die Borsten beider Gruppe besitzen jeweils die gleiche Länge, wobei die Borsten einer Gruppe jedoch länger sind als die Borsten der anderen Gruppe.

Durch die Kreisscheibe 3 erstrecken sich mehrere durchgehende Bohrungen 7, welche Leitungen für die Reinigungsflüssigkeit darstellen, worauf weiter unten eingegangen wird.

Parallel zur Kreisscheibe 3 ist der Bürstenkopf 2 mit einer Stützscheibe 8 ausgestattet, die ebenfalls eine Kreisscheibe darstellt und den gleichen Durchmesser wie die Kreisscheibe 3 besitzt. Kreisscheibe 3 und Stützscheibe 8 sind an ihrem außen umlaufenden Seitenrand durch einen Steg 9 miteinander verbunden. Die Kreisscheibe 3 und die Stützscheibe 8 sind dabei derart mit dem Steg 9 verbunden, dass zwischen diesen beiden parallel und mit Abstand voneinander angeordneten Scheiben 3,8 ein Zwischenraum 10 ausgebildet ist, der radial außen durch den genannten Steg 9 verschlossen ist.

Die Stützscheibe 8 ist auf der borstenabgewandten Seite mit einem Hohlzylinderstutzen 11 ausgestattet. Zudem ist auf der borstenabgewandten Seite der Stützscheibe 8 eine Zahnradscheibe 12 angebracht, durch die sich der Hohlzylinderstutzen 11 bis in den Zwischenraum 10 erstreckt und deren Durchmesser kleiner ist als der Durchmesser der Stützscheibe 8.

Kreisscheibe 3, Steg 9, Stützscheibe 8 und Zahnradscheibe 12 sind einstückig geformt oder durch Verkleben miteinander verbunden.

Unterhalb der Bürste 2 und somit auf der borstenabgewandten Seite der Kreisscheibe 3 ist ein Ringkanal 14 angeordnet. Dieser Ringkanal 14 besitzt einen rechteckigen Kanalquerschnitt und kann daher auch als hohles Kreisringsegment bezeichnet werden.

Im Zentrum des Ringkanals 14 ist eine Lagerbuchse 16 mit einem kreisförmigen Querschnitt ausgebildet, in welcher der Hohlzylinderstutzen 11 im zusammengebauten Zustand zu liegen kommt. Diese Lagerbuchse 16 lagert somit den Hohlzylinder 11 und damit die Bürste 2. Der Ringkanal 14 läuft um diese Lagerbuchse 16 um. Mit anderen Worten, die Innenwand des Ringkanals 14 umgrenzt im zusammengebauten Zustand den Hohlzylinderstutzen 11.

Die Längsachse des Hohlzylinderstutzens 11 fällt mit der Längsachse 13 der erfindungsgemäßen Reinigungsvorrichtung 1 zusammen. Auch die Längsachse der Lagerbuchse 16 fällt mit dieser Längsachse 13 zusammen. Diese Längsachse 13 verläuft ferner zentrisch durch die Kreisscheibe 3, die Stutzscheibe 8 und die Zahnradscheibe 12.

Im Inneren des Ringkanals 14 ist ein Elektromotor 17 angeordnet, der eine Welle 18 antreibt, die aus dem Kabelkanal 14 nach oben und somit zur Bürste 2 hin durch eine Bohrung 19 hinausgeführt ist. Diese Bohrung 19 befindet sich somit in der oberen ringscheibenartigen Wand 20 des Ringkanals 14.

Die Welle 18 besitzt radial außen Zähne, die mit Zähnen 15 zusammenwirken, die an dem radial äußeren Rand der Zahnradscheibe 12 angeordnet sind. Durch Rotieren der Welle 18 werden somit die Zahnradscheibe 12 und auch die damit verbundenen weiteren Elemente, beispielsweise die Kreisscheibe 3 und die Stützscheibe 8 in eine Drehbewegung versetzt.

Bei dieser Drehbewegung handelt es sich um eine oszillierende Drehbewegung bzw. Rotationsbewegung. Mit anderen Worten, bei dem Elektromotor 17 handelt es sich um einen oszillierenden Motor.

Im Inneren des Ringkanals 14 sind ferner ein Akku (nicht gezeigt) zur Stromversorgung des Elektromotors 17 und ein Ein/Ausschalter 21 vorgesehen, der mit einem Stift bzw. Knopf 37 versehen ist, der durch eine Bohrung in der radial außen umlaufenden Seitenwand des Ringkanals 14 nach außen hinausragt und von einem Benutzer betätigt werden kann.

Im unteren Bereich der Reinigungsvorrichtung 1 ist letztere mit einem Behälter 22 für eine Reinigungsflüssigkeit ausgestattet. Dieser Behälter 22 besitzt eine obere kreisscheibenförmige Stirnwand 23 und eine ebenfalls kreisscheibenförmige untere Stirnwand 24, die mittels einer balgartig ausgestalteten umlaufenden Außenwand 25 miteinander verbunden sind. Das Material dieser Außenwand 25 ist elastisch, sodass der Behälter 22 zusammengedrückt werden kann.

In der unteren Stirnwand 24 ist ein Einlassstutzen 26 ausgebildet, durch den Reinigungsflüssigkeit und insbesondere Wasser in das Innere des Behälters 22 eingefüllt werden kann. Dieser Einlassstutzen 26 kann durch einen Verschlussstopfen 27 fluiddicht verschlossen werden.

An der unteren Stirnwand 24 ist eine Schlaufe 28 vorgesehen, die von einem Benutzer ergriffen werden kann bzw. in welche der Benutzer seine Hand hineinführen kann, sodass der Handrücken an der Schlaufe anliegt und der Behälter von unten mit der Hand umgriffen bzw. ergriffen werden kann.

Untere Stirnwand 24 und obere Stirnwand 23 sind aus dem gleichen elastischen Material wie die Außenwand 25 des Behälters 22 hergestellt und insbesondere einstückig damit ausgestaltet.

Mittig im Zentrum der oberen Stirnwand 23 ist ein hohler zylindrischer Auslassstutzen 29 ausgebildet, der sowohl zum Inneren des Behälters 22 als auch nach außen hin offen ausgestaltet ist.

In dem zum Behälter 22 hin zeigenden Bereich besitzt der Auslassstutzen 29 einen sich nach radial innen erstreckenden Wulst 30, der den Innenquerschnitt des Auslassstutzens 29 derart verengt, dass eine Art Ventil gebildet und der Auslassstutzen im Ruhezustand geschlossen ist. Mit anderen Worten, in diesem Ruhezustand berühren sich die innenliegenden Bereiche des Wulstes 30.

Zwischen dem Ringkanal 14 und dem Behälter 22 ist eine in etwa kreisscheibenförmiges Verschlussscheibe 31 angeordnet, die eine durchgehende Öffnung 32 besitzt, durch welche sich der Auslassstutzen 29 im zusammengebauten Zustand erstreckt.

Der Außendurchmesser von der Bürste 2, dem Ringkanal 14 der oberen Stirnwand 23 und der unteren Stirnwand 24 sind in etwa gleich. Dies gilt auch für die Verschlussscheibe 31, welche jedoch einen nach radial außen gerichteten Vorsprung 33 besitzt.

Die Längsachse 13 erstreckt sich nicht nur zentrisch durch die Bürste 2 und den Ringkanal 14, sondern auch durch den Auslassstutzen 29 und die Verschlussscheibe 31.

Die Innenkontur der Öffnung 32 in der Verschlussscheibe 31 ist derart ausgestaltet, dass durch manuelles Drehen der Verschlussscheibe 31 über den Vorsprung 33 der Wulst 30 im Auslaufstutzen 29 zusammengepresst und letzterer dadurch verschlossen werden kann. Durch entgegengesetztes Drehen der Verschlussscheibe 31 übt die Innenkontur der Öffnung 32 keinen Druck mehr auf den Wulst 30 aus, sodass der Wulst 30 durch die Reinigungsflüssigkeit bei Druckbeaufschlagung durch den Benutzer auseinandergedrückt werden kann.

Zur drehenden Lagerung der Verschlussscheibe 31 ist letztere mit einer Bohrung 38 versehen, in die im zusammengebauten Zustand ein Lagerzapfen 39 eingreift, der auf der Außenseite der oberen Stirnwand des Behälters 22 angeordnet ist und sich zur Verschlussscheibe 31 erstreckt.

Um die erfindungsgemäße Reinigungsvorrichtung in Betrieb zu nehmen, füllt der Benutzer die gewünschte Reinigungsflüssigkeit, beispielsweise Wasser, durch den Einlassstutzen 26 in den Behälter 22 und verschließt dann den Einlassstutzen 26 mittels des Verschlussstopfens 27.

Des Weiteren schaltet der Benutzer den Motor 17 ein. Die Bürste 2 wird mittels der Welle 18 des Motors 17 über die Zahnradscheibe 12 in eine oszillierende Drehbewegung versetzt.

Durch Zusammendrücken des Behälters 22 gelangt Wasser durch den Auslassstutzen 29 in das Innere des Hohlzylinderstutzens 11 und von dort in den Zwischenraum 10. Von diesem Zwischenraum 10 wird dann die Reinigungsflüssigkeit durch die durchgehenden Bohrungen 7 in den Bereich der Borsten 5 geleitet.

Die Abdichtung zwischen der Außenwand des Auslassstutzens 29 und der Innenwand des Hohlzylinderstutzens 11 wird mit Hilfe eines O-Ringes 40 bewirkt.

Zum Auffangen der Reinigungsflüssigkeit dient ein schwammartiger Steg 41, der borstenseitig auf der Kreisscheibe 3 radial vollständig umläuft und eine Art Bassin umgrenzt.

Zum Abdecken der Bürste 2 dient eine auf die Reinigungsvorrichtung derart aufsetzbare Verschlusskappe 35 mit zylindrischer Außenwand und kreisscheibenförmiger Stirnwand 36, dass die Bürste 2 im geschlossenen Zustand in das Innere der Verschlusskappe 35 eingesetzt ist und ortsfest, beispielsweise durch Kraftschluss, dort verbleibt. Zur Benutzung der Reinigungsvorrichtung 1 muss der Benutzer die Verschlusskappe lediglich abziehen.

Alternativ kann die Bürste 2 im Inneren eines nach außen offenen Reinigungsbehältnisses, beispielsweise in einem Trog, insbesondere am Boden davon angeordnet sein. Diese Alternative ist in den Zeichnungen jedoch nicht dargestellt.

### Bezugszeichenliste

- 1: Reinigungsvorrichtung
- 2: Bürste
- 3: Kreisscheibe
- 4: Vorderseite
- 5: Borsten
- 6: Sacklochbohrung
- 7: Durchgehende Bohrung
- 8: Stützscheibe
- 9: Steg
- 10: Zwischenraum
- 11: Hohlzylinderstutzen
- 12: Zahnradscheibe
- 13: Längsachse
- 14: Ringkanal
- 15: Zähne
- 16: Lagerbuchse
- 17: Elektromotor
- 18: Welle
- 19: Bohrung
- 20: Wand
- 21: Schalter
- 22: Behälter
- 23: Obere Stirnwand des Behälters 22
- 24: Untere Stirnwand des Behälters 22
- 25: Außenwand bzw. Seitenwand des Behälters 22
- 26: Einlassstutzen
- 27: Verschlussstopfen
- 28: Schlaufe
- 29: Auslassstutzen
- 30: Wulst
- 31: Verschlussscheibe
- 32: Öffnung
- 33: Vorsprung
- 34: Schwammartiger Steg
- 35: Verschlusskappe
- 36: Stirnwand der Verschlusskappe 35
- 37: Stift
- 38: Bohrung
- 39: Lagerzange
- 40: O-Ring
- 41: Steg

## Patentansprüche

1. Tragbare Reinigungsvorrichtung für Tiere, insbesondere für Katzen- und Hundepfoten, mit einer Bürste (2), die mit Reinigungselementen (5) ausgestattet ist, mit einem Behälter (22) für eine Reinigungsflüssigkeit, mit mindestens einer Leitung (7) für die Reinigungsflüssigkeit von dem Behälter (22) zur Bürste (2), einem Motor (17) und einer Energiequelle für den Motor (17),
**dadurch gekennzeichnet, dass**
die Bürste (2) beweglich in der Reinigungsvorrichtung (1) angeordnet ist,
der Motor (17) dazu geeignet ist, im Betriebszustand die Bürste (2) zu bewegen.

2. Reinigungsvorrichtung nach Anspruch 1,
**dadurch gekennzeichnet, dass**
die Reinigungselemente Borsten (5) darstellen.

3. Reinigungsvorrichtung nach Anspruch 1 oder 2,
**dadurch gekennzeichnet, dass**
die Reinigungselemente unterschiedlich starke, unterschiedlich lange oder unterschiedlich lange und unterschiedlich starke Borsten (5) darstellen.

4. Reinigungsvorrichtung nach vorhergehenden Ansprüche,
**dadurch gekennzeichnet, dass**
die Bürste (2) drehbar oder oszillierend hin- und her-beweglich in der Reinigungsvorrichtung (1) angeordnet ist.

5. Reinigungsvorrichtung nach Anspruch 4,
**dadurch gekennzeichnet, dass**
die Bürste (2) derart in der Reinigungsvorrichtung (1) angeordnet ist, dass sie eine oszillierende Drehbewegung durchführen kann.

6. Reinigungsvorrichtung nach einem der vorhergehenden Ansprüche,
**dadurch gekennzeichnet, dass**
die Bürste (2) eine Platte darstellt und die Reinigungselemente (5) auf einer der großen Seiten der Platte angeordnet sind.

7. Reinigungsvorrichtung nach Anspruch 1 bis 5,
**dadurch gekennzeichnet, dass**
die Bürste (2) eine Kreisscheibe (3) darstellt und die Reinigungselemente (5) auf einer der großen Seiten der Kreisscheibe (3) angeordnet sind.

8. Reinigungsvorrichtung nach Anspruch 7,
**dadurch gekennzeichnet, dass**
die Kreisscheibe (3) an ihrem Außenrand auf derjenigen Seite, auf der sich die Reinigungselemente (5) befinden, einen radial umlaufenden schwammartigen Steg (41) besitzt.

9. Reinigungsvorrichtung nach einem der vorhergehenden Ansprüche, **dadurch gekennzeichnet, dass**
der Motor ein Elektromotor (17) ist und die Energiequelle eine Stromquelle darstellt.

10. Reinigungsvorrichtung nach einem der vorhergehenden Ansprüche,
**dadurch gekennzeichnet, dass**
der Behälter (22) komprimierbar ist.

11. Reinigungsvorrichtung nach Anspruch 10,
**dadurch gekennzeichnet, dass**
der Behälter (22) die Form eines Hohlzylinders mit zwei Stirnseiten (23,24) und einer umlaufenden Seitenwand (25) besitzt und die Seitenwand (25) als Balg ausgebildet ist.

12. Reinigungsvorrichtung nach einem der vorhergehenden Ansprüche,
**dadurch gekennzeichnet, dass**
die Reinigungsvorrichtung (1) mit einem nach außen offenen Reinigungsbehältnis zur Aufnahme einer Katzen- oder Hundepfote ausgestattet ist und die Bürste (2) in Inneren des Reinigungsbehältnisses angeordnet ist.

13. Reinigungsvorrichtung nach Anspruch 12,
**dadurch gekennzeichnet, dass**
die Bürste (2) am Boden des Reinigungsbehältnisses angeordnet ist.
